# EUROPÄISCHE PATENTSCHRIFT

(11) **EP 1 152 987 B1**
(45) Veröffentlichungstag und Bekanntmachung des Hinweises auf die Patenterteilung: **03.03.2004**
(21) Anmeldenummer: 00962415.6
(22) Anmeldetag: 31.08.2000
(51) Int. Cl.: C03B 9/453

(54) **VORRICHTUNG UND VERFAHREN ZUM ÜBERSCHIEBEN VON GLASGEGENSTÄNDEN**
DEVICE AND METHOD FOR PUSHING GLASS OBJECTS
DISPOSITIF ET PROCEDE POUR FAIRE GLISSER DES OBJETS EN VERRE

(30) Priorität: 26.11.1999 DE 19957079
(43) Veröffentlichungstag der Anmeldung: 14.11.2001
(73) Patentinhaber: Heye International GmbH, 31683 Obernkirchen (DE)
(72) Erfinder: BÖGERT, Hermann, 31749 Auetal (DE); MALEK, Raimund, 31749 Auetal (DE)
(74) Vertreter: Callies, Rainer
(86) Internationale Anmeldenummer: PCT/EP2000/008477
(87) Internationale Veröffentlichungsnummer: WO 2001/038238

(56) Entgegenhaltungen:
- DE-B- 2 746 675
- DE-C- 19 800 080
- DE-U- 29 902 149

## Beschreibung

Die Erfindung betrifft eine Vorrichtung nach dem Oberbegriff des Anspruchs 1 oder 3 sowie ein Verfahren zum Betrieb einer solchen Vorrichtung.

Bei einer bekannten Vorrichtung dieser Art (DE 299 02 149 U1) ist offenbart, dass der Längskanal in dem freien Ende der ersten Kolbenstange ausgebildet ist. Das an den Längskanal angeschlossene Luftnetz spielt dort keine Rolle.

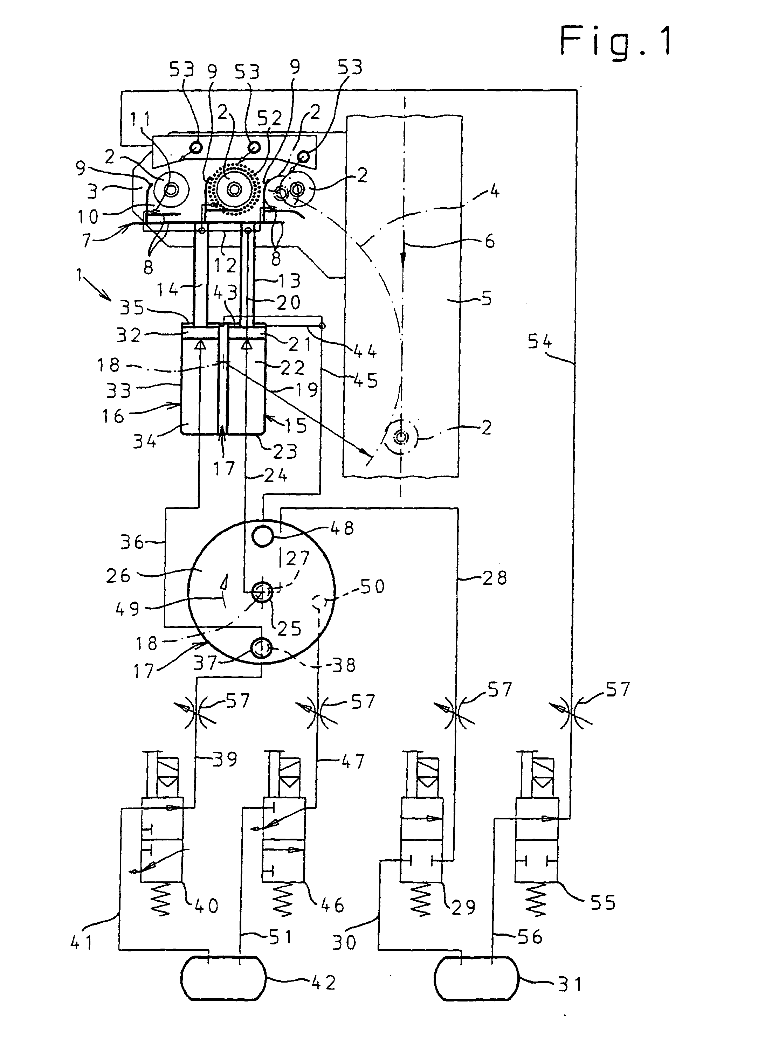

Aus der US 4 927 444 A ist es an sich bekannt, den Überschieber an der Kolbenstange nur einer einzigen pneumatischen Kolben-Zylinder-Einheit zu befestigen. Der Längskanal durchdringt die gesamte Kolbenstange und den Kolben und mündet in einen Vorschubraum der Kolben-Zylinder-Einheit. Der Vorschubraum ist gemäß Fig. 1 über ein Wegeventil wahlweise mit einer ersten Druckluftquelle von verhältnismäßig niedrigem Druck oder mit einer zweiten Druckluftquelle von verhältnismäßig hohem Druck zur Versorgung der Düsen mit Blasluft verbindbar. Nachteilig ist, dass bei Verbindung des Vorschubraums mit der ersten Druckluftquelle zwar der Überschieber langsam vorgeschoben wird, aber auch Druckluft aus den Düsen ungenutzt verlorengeht. Nachteilig ist ferner, dass in der anderen Stellung des Wegeventils das Anblasen der Glasbehälter aus den Düsen mit hohem Aufwand mit dem hohen Druckluftdruck geschieht.

Aus der DE 692 05 793 T2 ist eine Kolben-Zylinder Einheit zum Linearantrieb eines an der Kolbenstange befestigten Preßstempels in einer Preß-Blase-Glasformmaschine an sich bekannt. Kolben und Kolbenstange weisen eine axiale Durchgangsbohrung für die Zuführung von Kühlluft zu dem Preßstempel auf. In die Durchgangsbohrung erstreckt sich abgedichtet das freie Ende eines Kühlluftrohres, dessen anderes Ende an einer Endkappe des Zylinders festgelegt ist und aus einem Kanal in der Endkappe mit Kühlluft versorgt wird.

Aus der US 4 462 519 A ist es an sich bekannt, auf der Absetzplatte in einer Reihe abgesetzte Glasbehälter derart durch maschinenfeste Zubringerdüsen mit Druckluft anzublasen, dass jeder Glasbehälter vor Beginn der Schwenkung des Überschiebers in einen Winkel des Überschiebers geschoben wird. Die Winkel sind unterschiedlich orientiert und unabhängig voneinander vorschiebbar und wieder rückziehbar. Ähnliche Zubringerdüsen sind aus der DE 198 00 080 C1 an sich bekannt.

Aus der US 4 340 413 A ist es an sich bekannt, für den Vorschub und das Rückziehen des Überschiebers zwei zueinander parallele Kolben-Zylinder-Einheiten zu verwenden, deren Kolbenstangen an dem Überschieber befestigt sind.

Die DE 27 46 675 C2 zeigt Einzelheiten des Schwenkantriebs und der Druckmediumführung und -steuerung für das Vorschieben und Rückziehen des Überschiebers.

Der Erfindung liegt die Aufgabe zugrunde, die Luftführung in der Vorrichtung zu verbessern und den Druckluftverbrauch zu verringern.

Diese Aufgabe ist zunächst durch die Vorrichtung gemäß Anspruch 1 gelöst. Die Absetzplatte ist vorzugsweise perforiert und von unten gesteuert mit Kühlluft durchströmbar. Die zweite Kolben-Zylinder-Einheit besorgt allein das Vorschieben des Überschiebers in seine äußeren Endstellung. Die erste Kolben-Zylinder-Einheit übernimmt dagegen allein die Versorgung der Düsen mit Blasluft. Auf diese Weise kann insbesondere Blasluft genau gesteuert nur dann aus den Düsen austreten, wenn dies zum Fixieren der Glasgegenstände in den Winkeln des Überschiebers während des schwenkenden Überschiebens erforderlich ist. Diese Merkmale führen zu einer spürbaren Einsparung von Druckluft. Ein weiterer Vorteil ist der, dass sich keine störende Blasluft in den Winkeln befindet, solange die Glasgegenstände in die Winkel eingebracht werden.

Durch die Merkmale des Anspruchs 2 ist ein schnelles Rückziehen des Überschiebers dann möglich, wenn der Überschieber die Glasgegenstände auf das Transportband übergeschoben hat. Da das Transportband mit konstanter Geschwindigkeit weiterläuft, müssen Kollisionen der Schubfinger mit den übergeschobenen Glasgegenständen vermieden werden. Dem dienen die Merkmale des Anspruchs 2.

Die vorerwähnte Aufgabe ist auch durch die Merkmale des Anspruchs 3 gelöst. Das Teleskoprohr stellt eine kostengünstige Art der Versorgung der Düsen mit Blasluft dar. Das Teleskoprohr ist von außen zugänglich und kann auf diese Weise leicht überwacht und bei Bedarf gewartet und ausgetauscht werden.

Gemäß Anspruch 4 ergibt sich ein vorteilhaftes, verhältnismäßig langsames Vorschieben des Überschiebers in seine äußere Endstellung. Dadurch wird in der gleichen Weise wie gemäß Anspruch 1 erreicht, dass der Überschieber nicht zu schnell in seine äußere Endstellung vorgeschoben wird. Dies verhindert, dass der Überschieber beim Vorschieben mit den später überzuschiebenden Glasgegenständen kollidiert. Die Glasgegenstände können während des Vorschiebens noch an einem Ausnehmer hängen, der die Glasgegenstände aus der Glasformmaschine auf die Absetzplatte transportiert. Während dieses Vorgangs sollen Berührungen zwischen dem Überschieber und den abzusetzenden Glasgegenständen vermieden werden.

Die Merkmale des Anspruchs 5 führen wiederum zu erwünscht schneller Zurückbewegung des Überschiebers in seine innere Ausgangsstellung.

Die Merkmale des Anspruchs 6 sind konstruktiv besonders vorteilhaft.

Gemäß Anspruch 7 ergibt sich auf einfache Weise eine einstellbare und genaue Wegbegrenzung für den Überschieber.

Gemäß Anspruch 8 werden Zubringerdüsen dann eingesetzt, wenn die auf der Absetzplatte abgesetzten Glasbehälter noch zu weit von den Winkeln des in seiner äußeren Endstellung befindlichen Überschiebers angeordnet sind. In diesem Fall können die Glasgegenstände zunächst durch die Zubringerdüsen in die Winkel hineinbewegt werden, bevor die Düsen der Winkel eine Fixierung der Glasgegenstände in den Winkeln übernehmen. Das vierte Wegeventil kann als 2Wege/2Stellungsventil ausgebildet sein.

Gemäß Anspruch 9 können die Glasgegenstände durch die Zubringerdüsen in Drehung versetzt und besonders schonend und sicher in die Winkel eingebracht werden. Ein unerwünschtes Ansaugen der Glasgegenstände in Richtung der Zubringerdüsen ist vermieden.

Durch die Merkmale des Anspruchs 10 lässt sich die Zufuhr von Druckluft zu den einzelnen Verbrauchern feinfühlig so einstellen, dass der Arbeitsablauf optimal erfolgt.

Die zuvor erwähnte Aufgabe ist auch durch die Verfahrensmerkmale des Anspruchs 11 gelöst. Auch hierdurch ergibt sich eine spürbare Einsparung von Druckluft. Während des Einbringens der Glasgegenstände in die Winkel befindet sich dort keine störende Blasluft. Das erste Wegeventil kann z.B. als 2Wege/2Stellungsventil ausgebildet sein. Das erste Wegeventil kann den Düsen kurz vor dem Schwenkbeginn des Überschiebers Druckluft zuleiten. Dadurch wird gewährleistet, dass die Glasgegenstände in jedem Fall sicher in ihren Winkeln des Überschiebers gehalten werden.

Gemäß Anspruch 12 können die Glasgegenstände zunächst durch Wirkung der Zubringerdüsen in die Winkel hineinbewegt werden, bevor dort die Düsen die Fixierung der Glasgegenstände in den Winkeln übernehmen.

Diese und weitere Merkmale und Vorteile der Erfindung werden nachfolgend anhand der in den Zeichnungen dargestellten Ausführungsbeispiele näher erläutert. Es zeigt
Fig. 1 eine erste Ausführungsform der Vorrichtung in schematischer Darstellung und in einer ersten Betriebsstellung,
Fig. 2 die Vorrichtung gemäß Fig. 1 in einer anderen Betriebsstellung,
Fig. 3 eine teilweise geschnittene Draufsicht auf eine andere Ausführungsform der Vorrichtung,
Fig. 4 Funktionskurven (A) bis (F) für einen Betriebszyklus der Vorrichtung,
Fig. 5 die Draufsicht auf einen Teil einer anderen Ausführungsform der Vorrichtung und
Fig. 6 im Wesentlichen die Schnittansicht nach Linie VI-VI in Fig. 5.

Fig. 1 zeigt eine Vorrichtung 1 zum Überschieben dreier hohler Glasgegenstände 2 von einer Absetzplatte 3 einer nicht weiter dargestellten Glasformmaschine entlang einer gekrümmten Bahn 4 auf ein Transportband 5. Das Transportband 5 bewegt sich mit konstanter Geschwindigkeit in Richtung eines Pfeils 6. Bei der Glasformmaschine kann es sich z.B. um eine Sektion einer I.S. (Individual Section)-Glasformmaschine handeln.

Die Vorrichtung 1 weist einen in Fig. 1 nur schematisch dargestellten Überschieber 7 mit einem Basisteil 8 und für jeden überzuschiebenden Glasgegenstand 2 einen sich quer von dem Basisteil 8 erstreckenden Schubfinger 9 auf. Jeder Schubfinger 9 definiert mit dem Basisteil 8 einen Winkel 10 zur Aufnahme des zugehörigen Glasgegenstands 2. Der Überschieber 7 weist für jeden Winkel 10 wenigstens eine Düse 11 auf. Aus jeder Düse 11 kann Druckluft derart ausgeblasen werden, dass zwischen dem Überschieber 7 und dem Glasgegenstand 2 ein den Glasgegenstand 2 in die Winkel 10 ziehender Unterdruck entsteht. Jede Düse 11 ist über einen in dem Überschieber 7 vorgesehenen Versorgungskanal 12 mit Druckluft beaufschlagbar. Der Überschieber 7 ist an freien Enden zweier zueinander paralleler, in einer waagerechten Ebene angeordneter Kolbenstangen 13 und 14 pneumatischer Kolben-Zylinder-Einheiten 15 und 16 befestigt.

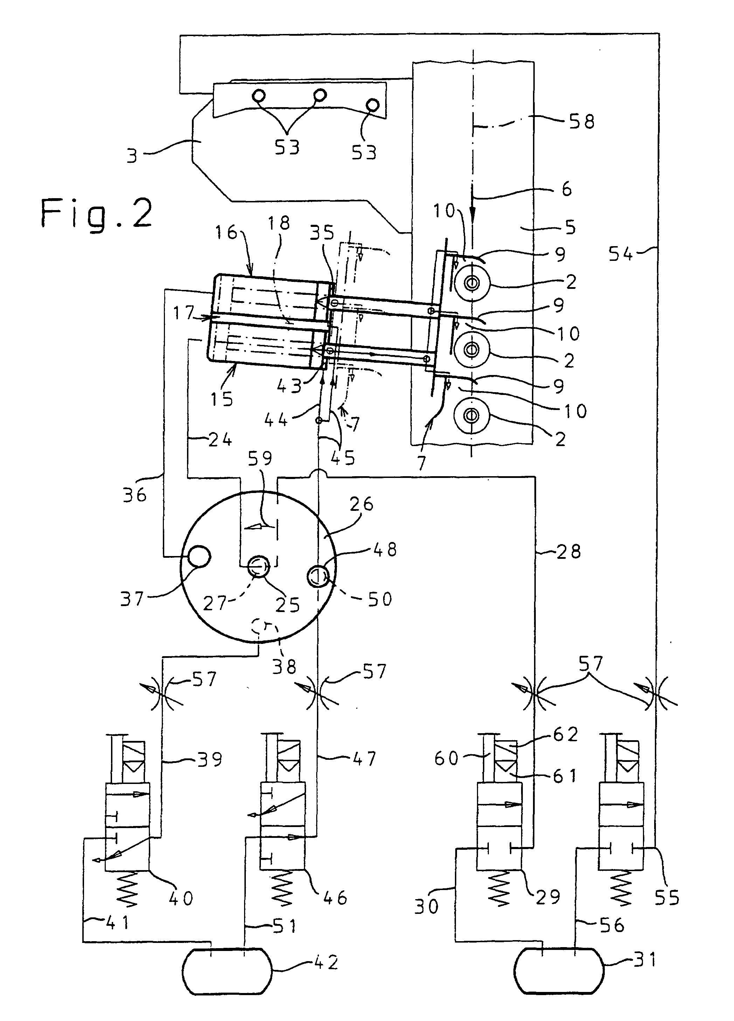

Im Fall der Fig. 1 ist der Überschieber 7 durch die Kolben-Zylinder-Einheit 15 in eine in den Fig. 1 und 2 mit voll ausgezogenen Linien dargestellte äußere Endstellung vorschiebbar und in eine in Fig. 2 mit strichpunktierten Linien angedeutete innere Ausgangsstellung zurückbewegbar. Die Kolben-Zylinder-Einheiten 15, 16 sind über eine Tragstruktur 17 relativ zueinander festgelegt und um eine senkrechte Achse 18 zwischen einer in Fig. 2 gezeichneten Übemahmestellung an der Absetzplatte 3 und einer in Fig. 2 mit voll ausgezogenen Linien gezeichneten Abgabestellung an dem Transportband 5 um etwa 105° hin und her schwenkbar. Diese Schwenkung geschieht in dem vorliegenden Fall auf der als Kreisbogen ausgebildeten gekrümmten Bahn 4 mit einem Radius 19.

Der Versorgungskanal 12 ist mit einem Längskanal 20 verbunden, der die gesamte erste Kolbenstange 13 und einen zugehörigen ersten Kolben 21 der ersten Kolben-Zylinder-Einheit 15 durchdringt und in einen ersten Vorschubraum 22 eines zugehörigen ersten Zylinders 23 mündet. Der erste Vorschubraum 22 ist über eine Leitung 24, eine mittige Bohrung 25 in einer einen Bestandteil der Tragstruktur 17 bildenden Steuerscheibe 26, einen mit der Bohrung 25 koaxialen Kanal 27 im feststehenden Teil der Vorrichtung 1 und eine Leitung 28 mit einem als 2Wege/2Stellungsventil ausgebildeten ersten Wegeventil 29 verbunden. Das erste Wegeventil 29 ist über eine Leitung 30 mit einer ersten Druckluftquelle 31 von verhältnismäßig niedrigem Druck von z.B. maximal 2,5 bar verbunden.

Die zweite Kolben-Zylinder-Einheit 16 weist die zweite Kolbenstange 14, einen zweiten Kolben 32 und in einem zweiten Zylinder 33 einen zweiten Vorschubraum 34 und einen zweiten Rückzugsraum 35 auf. Der zweite Vorschubraum 34 ist über eine Leitung 36, eine Bohrung 37 am Umfang der Steuerscheibe 26, einen Kanal 38 im feststehenden Teil der Vorrichtung 1 und eine Leitung 39 mit einem als 3Wege/2Stellungsventil ausgebildeten zweiten Wegeventil 40 verbunden. Das zweite Wegeventil 40 ist seinerseits über eine Leitung 41 mit einer zweiten Druckluftquelle 42 von verhältnismäßig hohem Druck von z.B. maximal 6 bar verbunden.

Ein erster Rückzugsraum 43 in dem ersten Zylinder 23 und der zweite Rückzugsraum 35 sind über Leitungen 44 und 45 mit einer Bohrung 48 am Umfang der Steuerscheibe 26 verbunden. Durch Schwenkung der Tragstruktur 17 und damit der Steuerscheibe 26 im Uhrzeigersinn gemäß Pfeil 49 kann die Bohrung 48 zur Deckung mit einem Kanal 50 im ortsfesten Teil der Vorrichtung 1 gebracht werden. Der Kanal 50 ist über eine Leitung 47 mit einem als 3Wege/2Stellungsventil ausgebildeten dritten Wegeventil 46 verbunden. Das dritte Wegeventil 46 ist seinerseits über eine Leitung 51 mit der zweiten Druckluftquelle 42 verbunden.

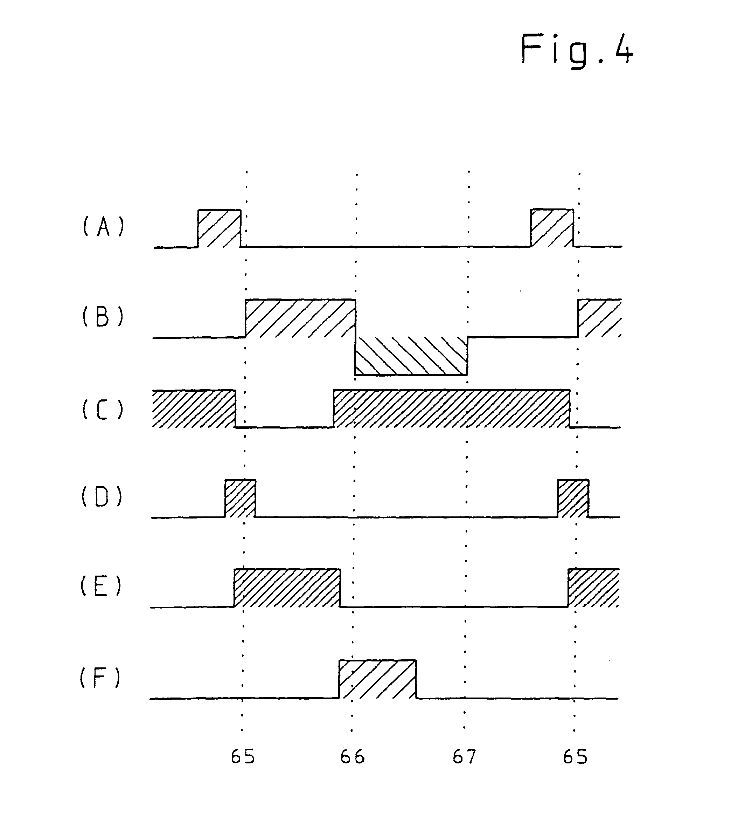

Die Absetzplatte 3 ist im Absetzbereich jedes Glasgegenstands 2 mit auf einer Kreisfläche verteilten Durchbrechungen 52 versehen. Zur Vereinfachung sind die Druchbrechungen 52 nur für einen Glasgegenstand 2 gezeichnet. Durch die Durchbrechungen kann während eines bestimmten Teils des Betriebszyklus (vgl. Funktionskurve (C) in Fig. 4) Kühlluft zur Kühlung der auf der Absetzplatte 3 abgesetzten Glasgegenstände 2 geblasen werden.

Die Glasgegenstände 2 werden ursprünglich durch einen nicht weiter gezeichneten Ausnehmer aus der Glasformmaschine entnommen und auf einer Geraden auf der Absetzplatte 3 abgesetzt. Dieser Zustand ist mit voll ausgezogenen Linien der Glasgegenstände 2 in Fig. 1 dargestellt. Sodann wird das zweite Wegeventil 40 in die in Fig. 1 dargestellte Schaltstellung durchgeschaltet, in welcher Druckluft aus der zweiten Druckluftquelle 42 über die Leitung 41, das zweite Wegeventil 40, die Leitung 39, den Kanal 38, die Bohrung 37 und die Leitung 36 in den zweiten Vorschubraum 34 gelangt. Dadurch werden der zweite Kolben 32, die zweite Kolbenstange 14 und, über den Überschieber 7 mitgeschleppt, auch der erste Kolben 21 und die erste Kolbenstange 13 in die in Fig. 1 gezeichnete äußere Endstellung vorgeschoben. In dieser Stellung befinden sich die Glasgegenstände 2 noch in einem verhältnismäßig großen Abstand von den zugehörigen Winkeln 10. Dieser große Abstand führt dazu, dass die Düsen 11 ihre die Glasgegenstände 2 in die Winkel 10 hineinsaugende Wirkung noch nicht entfalten können. Deshalb sind neben den auf der Absetzplatte 3 abgesetzten Glasgegenständen 2 Zubringerdüsen 53 maschinenfest angeordnet. Jede Zubringerdüse 53 ist ursprünglich tangential auf eine dem zugehörigen Schubfinger 9 zugewandte Seite des Glasgegenstands 2 gerichtet, wie dies in Fig. 1 angedeutet ist. Die aus den Zubringerdüsen 53 austretenden Druckluftstrahlen induzieren eine Drehung der Glasgegenstände 2 um ihre Längsachse und befördern die Glasgegenstände 2 in die Winkel 10 hinein, wie dies in Fig. 1 für den rechten, strichpunktierten Glasgegenstand 2 angedeutet ist. Dabei wird ein Ansaugen der Glasgegenstände 2 in Richtung der Zubringerdüsen 53 vermieden. Spätestens bei Anlage des Glasgegenstands 2 in seinem Winkel 10 können die Düsen 11 ihre Saugwirkung auf die Glasgegenstände 2 ausüben und diese in den Winkeln 10 auch dann halten, wenn nachfolgend der Überschieber 7 im Uhrzeigersinn entlang der gekrümmten Bahn 4 über das Transportband 5 geschwenkt wird. Die Zubringerdüsen 53 sind über eine Leitung 54 mit einem als 2Wege/2Stellungsventil ausgebildeten vierten Wegeventil 55 verbunden. Das vierte Wegeventil 55 ist seinerseits durch eine Leitung 56 mit der ersten Druckluftquelle 31 verbunden.

In jede der Leitungen 28, 39, 47 und 54 ist ein einstellbares Drosselventil 57 eingebaut, mit dem sich der Druck in der jeweiligen Leitung feinfühlig einstellen lässt.

Sobald die Glasgegenstände 2 in Fig. 1 durch die Zubringerdüsen 53 in die Winkel 10 bewegt worden sind, wird das Wegeventil 29 in eine untere Stellung durchgeschaltet. Dadurch werden die Düsen 11 über die Leitungen 30, 28, den Kanal 27, die Bohrung 25, die Leitung 24, den ersten Vorschubraum 22, den Längskanal 20 und den Versorgungskanal 12 mit Druckluft versorgt und halten auf diese Weise die Glasgegenstände 2 in den Winkeln 10 auch während des Überschwenkens des Überschiebers 7 aus seiner Übemahmestellung in Fig. 1 in seine Abgabestellung gemäß Fig. 2 über dem Transportband 5. Der dazu erforderliche Schwenkantrieb der Steuerscheibe 26 mit samt der Tragstruktur 17 kann z.B. durch den in der vorerwähnten DE 27 46 675 C2 offenbarten Antrieb erfolgen.

In der Abgabestellung des Überschiebers 7 gemäß Fig. 2 sind die Glasgegenstände 2 ideal auf die Mittellinie 58 des Transportbandes 5 übergeschoben worden. Die Glasgegenstände 2 haben sich in der Darstellung gemäß Fig. 2 wegen der kontinuierlichen Bewegung des Transportbandes 5 etwas aus den Winkeln 10 des Überschiebers 7 gelöst. In diesem Augenblick wird das Wegeventil 46 gemäß Fig. 2 in die untere Schaltstellung durchgeschaltet. Dadurch gelangt Druckluft aus der zweiten Druckluftquelle 42 über die Leitungen 51 und 47 in den Kanal 50 sowie durch die inzwischen damit fluchtende Bohrung 48 der Steuerscheibe 26 und die Leitungen 45, 44 in die Rückzugsräume 35, 43. Dies hat zur Folge, dass der Überschieber 7 so schnell in seine innere Ausgangsstellung (in Fig. 2 strichpunktiert dargestellt) zurückgezogen wird, dass keiner der Schubfinger 9 mit den auf das Transportband 5 übergeschobenen Glasgegenständen 2 kollidiert. Sodann kann die Tragstruktur 17 mit der Steuerscheibe 26 wieder entgegen dem Uhrzeigersinn gemäß dem Pfeil 59 zurückgeschwenkt werden, bis die Kolben-Zylinder-Einheiten 15, 16 wieder ihre Übernahmestellung gemäß Fig. 1 erreicht haben.

Die zeitliche Aufeinanderfolge aller nötigen Steuer- und Bewegungsfunktionen wird im Zusammenhang mit Fig. 4 im einzelnen erläutert werden. Alle Wegeventile 29, 40, 46 und 55 können in der gleichen Weise betätigt werden. Am Beispiel des Wegeventils 29 sieht man, dass die Betätigung einerseits durch Handschaltung 60 oder druckluftunterstützt 61 elektromagnetisch 62 ferngesteuert erfolgen kann. So kann neben der groben Steuerfunktion durch die Steuerscheibe und ihre Bohrungen 37 und 48 die Feinsteuerung der Druckluft durch die Wegeventile 40, 46 erfolgen. Die Blasluft für die Düsen 11 (Fig. 1) wird dagegen ohne Steuerfunktion der Steuerscheibe 26 allein durch Betätigung des Wegeventils 29 gesteuert. Gleiches gilt für die Versorgung der Zubringerdüsen 53 mit Druckluft über das Wegeventil 55.

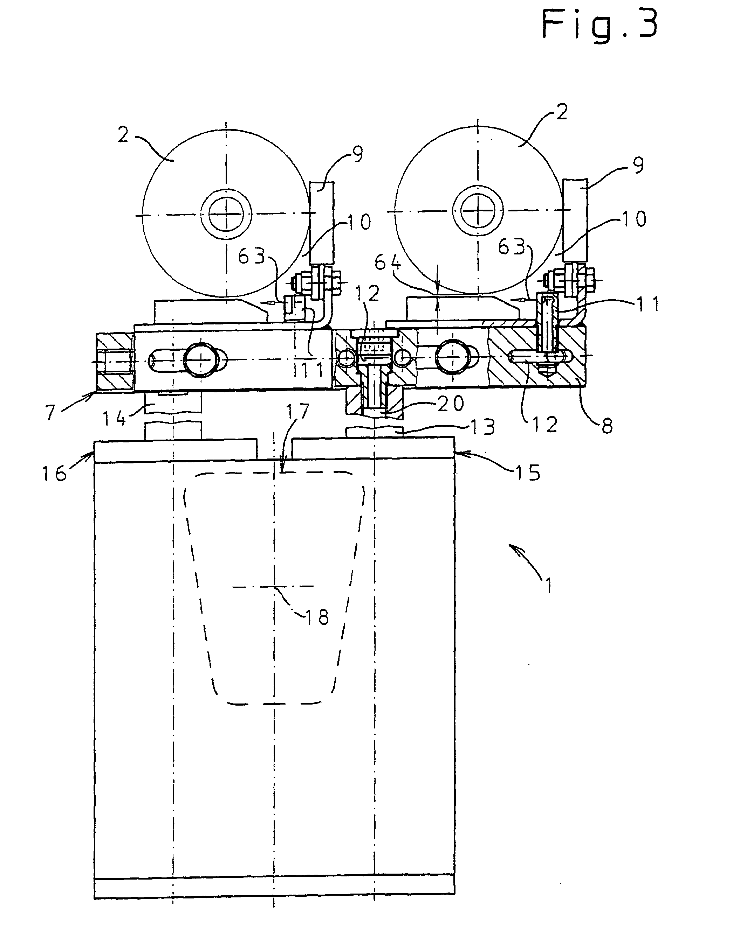

In Fig. 3 ist eine andere Ausführungsform der Vorrichtung 1 dargestellt. Hier werden im Gegensatz zu den Fig. 1 und 2 nur zwei Glasgegenstände 2 jeweils gleichzeitig von der Absetzplatte auf das Transportband übergeschoben. Ein weiterer Unterschied ist der, dass dieses Überschieben durch Schwenkung der Tragstruktur 17 mit samt den Kolben-Zylinder-Einheiten 15, 16 und dem Überschieber 7 in Fig. 3 im Gegenuhrzeigersinn stattfindet. Weitere Einzelheiten dieser Ausführungsform, insbesondere hinsichtlich der Ausbildung des Überschiebers 7, sind der eingangs erwähnten DE 299 02 149 U1 zu entnehmen.

Im Fall der Fig. 3 blasen die Düsen ihre Druckluftstrahlen 63 aus der Ecke jedes Winkels 10 parallel zu dem Basisteil 8 aus. Die Druckluft strömt dabei durch einen verhältnismäßig engen Spalt 64 zwischen dem Basisteil 8 und dem Glasgegenstand 2 hindurch, während der Glasgegenstand 2 definiert an seinem Schubfinger 9 anliegt.

Die Funktionskurven gemäß Fig. 4 haben folgende Bedeutung:
(A) = Vorschubbewegung des Überschiebers 7,
(B) = hin- und rückschwenkende Bewegung des Überschiebers 7,
(C) = Kühlluftzufuhr zu den Durchbrechungen 52 der Absetzplatte 3,
(D) = Blasluftzufuhr zu den Zubringerdüsen 53,
(E) = Blasluftzufuhr zu den Düsen 11 und
(F) = Rückzugsbewegung des Überschiebers 7.

Die senkrechten gepunkteten Linien in Fig. 4 kennzeichnen besondere Zeitpunkte innerhalb der Funktionskurven (A) bis (F) und haben folgende Bedeutung:
65 = Start des Vorwärtsschwenkens,
66 = Stopp des Vorwärtsschwenkens und Start des Rückschwenkens und
67 = Stopp des Rückschwenkens des Überschiebers 7.

In den Funktionskurven (A) und (C) bis (F) bedeuten die schraffierten Flächen jeweils aufgeschaltete Druckluft.

In der Funktionskurve (A) ist erkennbar, dass die Vorschubluft aus dem Wegeventil 40 kurz vor dem Zeitpunkt 65 abgeschaltet wird.

Aus der Funktionskurve (C) geht hervor, dass die Kühlluft von kurz vor dem Zeitpunkt 65 bis kurz vor dem Zeitpunkt 66 abgeschaltet wird, um ein geordnetes Überschieben der Glasgegenstände 2 nicht zu behindern.

Die Funktionskurve (D) zeigt, dass die Blasluftzufuhr zu den Zubringerdüsen 53 nur so lange aufrechterhalten wird, wie dies zum genügend weiten Hineinbewegen der Glasgegenstände 2 in die Winkel 10 gemäß Fig. 1 erforderlich ist.

Die Funktionskurve (E) verdeutlicht, dass die Blasluftzufuhr zu den Düsen zweckmäßigerweise kurz vor dem Zeitpunkt 65 beginnt. Von diesem Augenblick an übernehmen die Düsen die Fixierung der von den Zubringerdüsen 53 zugelieferten Glasgegenstände 2 in den Winkeln 10 und halten diese Fixierung bis kurz vor dem Zeitpunkt 66, also der Übergabe der Glasgegenstände 2 an das Transportband 5, aufrecht. Auch hier wird die Blasluftzufuhr zu den Düsen 11 so rechtzeitig weggeschaltet, dass die Abgabe der Glasgegenstände 2 an das Transportband 5 nicht gestört wird.

Zweckmäßigerweise wird gemäß der Funktionskurve (F) die Rückzugsbewegung des Überschiebers 7 schon kurz vor dem Zeitpunkt 66 eingeleitet. Der Zeitpunkt dieser Einleitung kann durch die Steuerung des Wegeventils 46 gemäß Fig. 2 sehr genau bestimmt werden. Ziel ist es, den Überschieber 7 so schnell und zu demjenigen Zeitpunkt zurückzuziehen, dass kein Schubfinger 9 die auf das weitenaufende Transportband 5 übergeschobenen Glasgegenstände 2 bei der Rückzugsbewegung berührt.

In allen Zeichnungsfiguren sind gleiche Teile mit gleichen Bezugszahlen versehen.

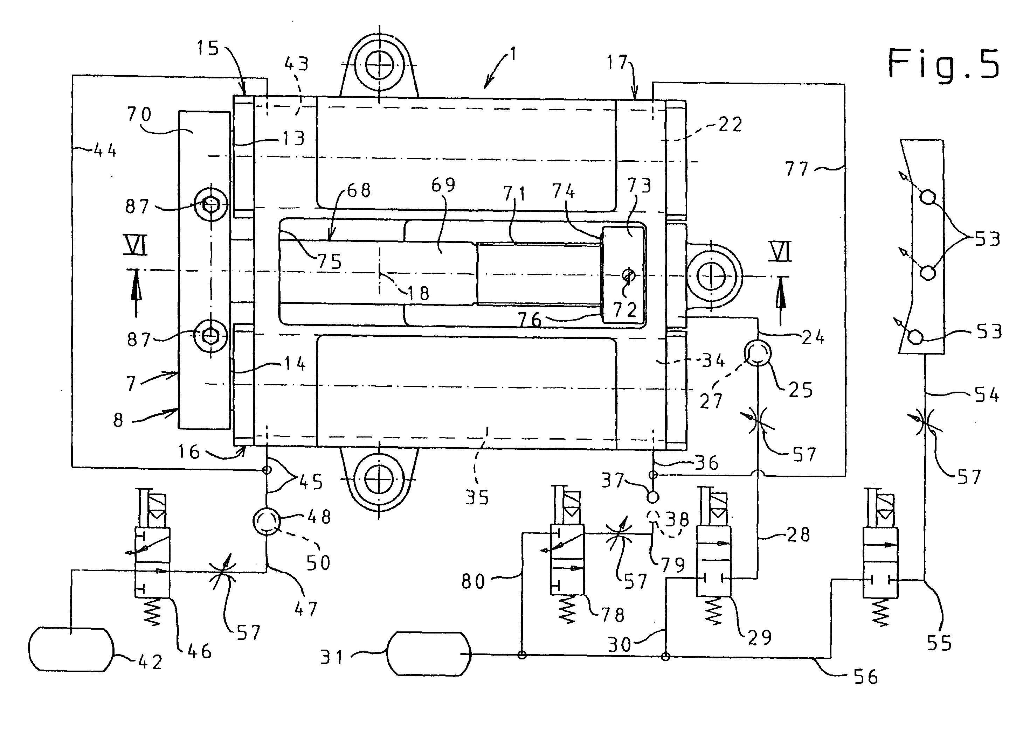

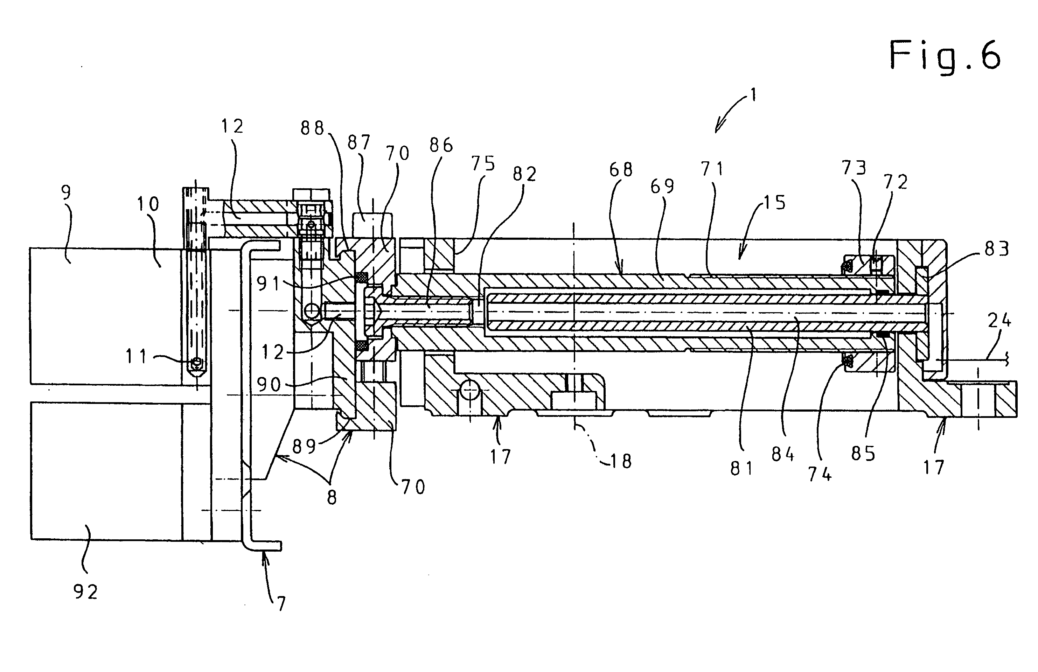

Bei dem Ausführungsbeispiel nach den Fig. 5 und 6 findet die Blasluftzufuhr zu den Düsen 11 nicht durch eine der Kolben-Zylinder-Einheiten 15, 16 statt, sondern durch ein gesondertes Teleskoprohr 68.

Ein Außenrohr 69 des Teleskoprohres 68 ist in der gleichen Weise wie die freien Enden der Kolbenstangen 13, 14 in den Fig. 5 und 6 links an einem Klemmstück 70 des Überschiebers 7 befestigt. Das in den Fig. 5 und 6 rechte, freie Ende des Außenrohres 69 ist mit einem Außengewinde 71 versehen. Mit dem Außengewinde 71 steht eine längs des Außenrohres 69 einstellbare und durch eine Madenschraube 72 in jeder gewählten axialen Stellung fixierbare Mutter 73 im Eingriff. Eine dem Überschieber 7 zugewandte Stimfläche 74 der Mutter 73 definiert zusammen mit einer gegenüberliegenden Anschlagfläche 75 der Tragstruktur 17 die äußere Endstellung des Überschiebers 7. Zur Verschleißminderung und Dämpfung ist in dem dargestellten Ausführungsbeispiel die Stirnfläche 74 durch einen in die Mutter 73 eingelassenen, aber axial aus der Mutter 73 herausragenden O-Ring 76 gebildet.

Die in Fig. 5 dargestellte pneumatische Schaltung ist grundsätzlich ähnlich aufgebaut wie die zu den Fig. 1 und 2 beschriebene pneumatische Schaltung. In Fig. 5 sind allerdings beide Vorschubräume 22, 34 über eine Leitung 77 und die Leitung 36 an die hier nur schematisch angedeutete Bohrung 37 der nicht weiter gezeichneten Steuerscheibe 26 (Fig. 1 und 2) angeschlossen. Ein hier als 3Wege/2Stellungsventil ausgebildetes fünftes Wegeventil 78 ist einerseits über eine Leitung 79 mit dem Kanal 38 und andererseits über eine Leitung 80 mit der ersten Druckluftquelle 31 verbunden. Bei diesem Ausführungsbeispiel werden also zum Vorschieben der Kolbenstangen 13, 14 und damit des Überschiebers 7 beide Vorschubräume 22, 34 mit Druckluft von verhältnismäßig geringem Druck beaufschlagt. Auch in diesem Fall erreicht man auf diese Weise, dass das Vorschieben vergleichsweise langsam vonstatten geht.

Aus Fig. 6 ist erkennbar, dass sich ein Innenrohr 81 des Teleskoprohres 68 in das Außenrohr 69 und in einen Innenraum 82 des Teleskoprohres 68 erstreckt. Das Innenrohr 81 ist rechts über einen Außenflansch 83 an der Tragstruktur 17 festgelegt. Ein Hohlraum 84 des Innenrohres 81 steht einerseits mit der Leitung 24 und andererseits mit dem Innenraum 82 in ständiger Verbindung. Das Außenrohr 69 ist gegenüber dem Innenrohr 81 durch eine Ringdichtung 85 gleitend abgedichtet.

Das in Fig. 6 linke Ende des Außenrohres 69 ist über eine Hohlschraube 86 an einem oberen Element des Klemmstücks 70 befestigt. Dieses obere Element weist zwei Durchgangsbohrungen auf, durch die Klemmschrauben 87 (siehe auch Fig. 5) gesteckt sind. Die Klemmschrauben 87 greifen mit ihrem Gewindeende in eine Gewindebohrung eines unteren Elements des Klemmstücks 70 ein. Die beiden Elemente des Klemmstücks 70 weisen jeweils eine Längsnut 88 und 89 auf, in denen jeweils ein Flansch eines Kupplungsstückes 90 des Überschiebers 7 festgeklemmt werden kann. Eine Ringdichtung 91 übernimmt die Abdichtung des oberen Elements des Klemmstücks 70 gegenüber dem Kupplungsstück 90. Aus dem Kupplungsstück 90 tritt der Versorgungskanal 12 des Überschiebers 7 aus.

Im Fall der Fig. 5 und 6 weist jeder Winkel 10 einen oberen Schubfinger 9 und einen unteren Schubfinger 92 auf. Bei verhältnismäßig niedrigen überzuschiebenden Glasgegenständen kann der obere Schubfinger 9 demontiert werden. Diese Zusammenhänge sind im einzelnen in der vorerwähnten DE 299 02 149 U1 beschrieben.

## Patentansprüche

1. Vorrichtung (1) zum Überschieben wenigstens eines hohlen Glasgegenstands (2) von einer Absetzplatte (3) einer Glasformmaschine entlang einer gekrümmten Bahn (4) auf ein Transportband (5),
mit einem Überschieber (7), der ein Basisteil (8) und für jeden überzuschiebenden Glasgegenstand (2) wenigstens einen, sich quer von dem Basisteil (8) erstreckenden Schubfinger (9;92) aufweist,
wobei jeder Schubfinger (9;92) mit dem Basisteil (8) einen Winkel (10) zur Aufnahme des Glasgegenstands (2) definiert,
wobei der Überschieber (7) für jeden Winkel (10) wenigstens eine Düse (11) aufweist,
wobei aus jeder Düse (11) Druckluft derart blasbar ist, dass zwischen dem Überschieber (7) und dem Glasgegenstand (2) ein den Glasgegenstand (2) in den Winkel (10) ziehender Unterdruck entsteht,
wobei jede Düse (11) über einen in dem Überschieber (7) vorgesehenen Versorgungskanal (12) mit Druckluft beaufschlagbar ist,
wobei der Überschieber (7) an freien Enden zweier zueinander paralleler, in einer waagerechten Ebene angeordneter Kolbenstangen (13,14) pneumatischer Kolben-Zylinder-Einheiten (15,16) befestigt ist und der Überschieber (7) in eine äußere Endstellung vorschiebbar und in eine innere Ausgangsstellung zurückbewegbar ist,
wobei der Versorgungskanal (12) mit einem Längskanal (20) in einer ersten (13) der Kolbenstangen (13,14) verbunden ist,
und wobei die Kolben-Zylinder-Einheiten (15,16) um eine senkrechte Achse (18) zwischen einer Übemahmestellung an der Absetzplatte (3) und einer Abgabestellung an dem Tansportband (5) hin und her schwenkbar sind,
**dadurch gekennzeichnet, dass** der Längskanal (20) die gesamte erste Kolbenstange (13) und einen zugehörigen ersten Kolben (21) einer ersten (15) der Kolben-Zylinder-Einheiten (15,16) durchdringt und in einen ersten Vorschubraum (22) eines zugehörigen ersten Zylinders (23) mündet,
dass der erste Vorschubraum (22) über ein erstes Wegeventil (29) wahlweise mit einer ersten Druckluftquelle (31) von verhältnismäßig niedrigem Druck verbindbar ist,
und dass ein zweiter Vorschubraum (34) in einem zweiten Zylinder (33) einer zweiten (16) der Kolben-Zylinder-Einheiten (15,16) über ein zweites Wegeventil (40) wahlweise mit einer zweiten Druckluftquelle (42) von verhältnismäßig hohem Druck oder mit der Atmosphäre verbindbar ist.

2. Vorrichtung nach Anspruch 1,
**dadurch gekennzeichnet, dass** ein erster Rückzugsraum (43) in dem ersten Zylinder (23) und ein zweiter Rückzugsraum (35) in dem zweiten Zylinder (33) über ein drittes Wegeventil (46) wahlweise mit der zweiten Druckluftquelle (42) oder mit der Atmosphäre verbindbar sind.

3. Vorrichtung (1) zum Überschieben wenigstens eines hohlen Glasgegenstands (2) von einer Absetzplatte (3) einer Glasformmaschine entlang einer gekrümmten Bahn (4) auf ein Transportband (5),
mit einem Überschieber (7), der ein Basisteil (8) und für jeden überzuschiebenden Glasgegenstand (2) wenigstens einen, sich quer von dem Basisteil (8) erstreckenden Schubfinger (9;92) aufweist,
wobei jeder Schubfinger (9;92) mit dem Basisteil (8) einen Winkel (10) zur Aufnahme des Glasgegenstands (2) definiert,
wobei der Überschieber (7) für jeden Winkel (10) wenigstens eine Düse (11) aufweist,
wobei aus jeder Düse (11) Druckluft derart blasbar ist, dass zwischen dem Überschieber (7) und dem Glasgegenstand (2) ein den Glasgegenstand (2) in den Winkel (10) ziehender Unterdruck entsteht,
wobei jede Düse (11) über einen in dem Überschieber (7) vorgesehenen Versorgungskanal (12) mit Druckluft beaufschlagbar ist,
wobei der Überschieber (7) an freien Enden zweier zueinander paralleler, in einer waagerechten Ebene angeordneter Kolbenstangen (13,14) doppeltwirkender pneumatischer Kolben-Zylinder-Einheiten (15,16) befestigt ist und der Überschieber (7) durch die Kolben-Zylinder-Einheiten (15,16) in eine äußere Endstellung vorschiebbar und in eine innere Ausgangsstellung zurückbewegbar ist,
und wobei die Kolben-Zylinder-Einheiten (15,16) um eine senkrechte Achse (18) zwischen einer Übemahmestellung an der Absetzplatte (3) und einer Abgabestellung an dem Transportband (5) hin und her schwenkbar sind,
**dadurch gekennzeichnet, dass** der Versorgungskanal (12) mit einem Innenraum (82) eines gasdichten Teleskoprohres (68) verbunden ist,
dass ein Ende des Teleskoprohres (68) an dem Überschieber (7) und das andere Ende des Teleskoprohres (68) an einer Tragstruktur (17) für die Kolben-Zylinder-Einheiten (15,16) dicht befestigt sind,
und dass ein Einlass des Teleskoprohres (68) über ein erstes Wegeventil (29) wahlweise mit einer ersten Druckluftquelle (31) von verhältnismäßig niedrigem Druck verbindbar ist.

4. Vorrichtung nach Anspruch 3,
**dadurch gekennzeichnet, dass** ein Vorschubraum (22,34) jedes Zylinders (23,33) der Kolben-Zylinder-Einheiten (15,16) über ein fünftes Wegeventil (78) wahlweise mit der ersten Druckluftquelle (31) oder mit der Atmosphäre verbindbar ist.

5. Vorrichtung nach Anspruch 3 oder 4,
**dadurch gekennzeichnet, dass** ein Rückzugsraum (35,43) jedes Zylinders (23,33) der Kolben-Zylinder-Einheiten (15,16) über ein drittes Wegeventil (46) wahlweise mit einer zweiten Druckluftquelle (42) von verhältnismäßig hohem Druck oder mit der Atmosphäre verbindbar ist.

6. Vorrichtung nach einem der Ansprüche 3 bis 5,
**dadurch gekennzeichnet, dass** ein Außenrohr (69) des Teleskoprohres (68) an dem Basisteil (8) des Überschiebers (7) befestigt und an seinem freien Ende abgedichtet (85) auf einem Innenrohr (81) des Teleskoprohres (68) geführt ist,
und dass ein Ende des Innenrohres (81) an der Tragstruktur (17) befestigt ist.

7. Vorrichtung nach Anspruch 6,
**dadurch gekennzeichnet, dass** das freie Ende des Außenrohres (69) mit einem Außengewinde (71) versehen ist,
dass mit dem Außengewinde (71) eine längs des Außenrohres (69) einstellbare und fixierbare (72) Mutter (73) im Eingriff steht,
und dass eine dem Überschieber (7) zugewandte Stimfläche (74) der Mutter (73) zusammen mit einer gegenüberliegenden Anschlagfläche (75) der Tragstruktur (17) die äußere Endstellung des Überschiebers (7) definiert.

8. Vorrichtung nach einem der Ansprüche 1 bis 6,
**dadurch gekennzeichnet, dass** neben dem wenigstens einen auf der Absetzplatte (3) abgesetzten Glasgegenstand (2) wenigstens eine auf den zugehörigen Glasgegenstand (2) gerichtete Zubringerdüse (53) maschinenfest angeordnet ist,
dass jede Zubringerdüse (53) über ein viertes Wegeventil (55) wahlweise mit der ersten Druckluftquelle (31) verbindbar ist,
und dass der wenigstens eine Glasbehälter (2) durch aus der wenigstens einen Zubringerdüse (53) austretende Druckluftstrahlen in einen Wirkungsbereich der wenigstens einen Düse (11) des Überschiebers (7) bewegbar ist.

9. Vorrichtung nach Anspruch 8,
**dadurch gekennzeichnet, dass** jede Zubringerdüse (53) ursprünglich tangential auf eine dem zugehörigen Schubfinger (9;92) zugewandte Seite des Glasgegenstands (2) gerichtet ist.

10. Vorrichtung nach einem der Ansprüche 1 bis 9,
**dadurch gekennzeichnet, dass** in einer Ausgangsleitung (28;39;47;54;79) jedes Wegeventils (29;40;46;55;78) ein einstellbares Drosselventil (57) angeordnet ist.

11. Verfahren zum Betrieb einer Vorrichtung (1) nach einem der Ansprüche 2 und 4 bis 10, mit den folgenden Schritten :
(a) Der Überschieber (7) wird durch Betätigung des zweiten (40) oder des fünften Wegeventils (78) in seine äußere Endstellung vorgeschoben, während die Rückzugsräume (35,43) über das dritte Wegeventil (46) mit der Atmosphäre verbunden sind,
(b) zumindest annähernd zeitgleich miteinander wird einerseits die Schwenkung der beiden Kolben-Zylinder-Einheiten (15,16) und damit des Überschiebers (7) mit den in den Winkeln (10) befindlichen Glasgegenständen (2) in Richtung des Transportbandes (5) eingeleitet und andererseits durch Betätigung des ersten Wegeventils (29) den Düsen (11) Druckluft zugeleitet,
(c) kurz bevor der Überschieber (7) in der Abgabestellung eintrifft, wird das erste Wegeventil (29) umgeschaltet und damit die Druckluftzufuhr zu den Düsen (11) unterbrochen,
(d) vor dem Erreichen der Abgabestellung wird das zweite (40) oder das fünfte Wegeventil (78) zur Entlüftung der zugehörigen Vorschubräume (22,34) umgeschaltet,
(e) zumindest annähernd beim Erreichen der Abgabestellung wird das dritte Wegeventil (46) zur Beaufschlagung der Rückzugsräume (35,43) mit Druckluft umgeschaltet, wodurch der Überschieber (7) im Eilrücklauf in seine innere Ausgangsstellung zurückbewegt wird, und
(f) die Kolben-Zylinder-Einheiten (15,16) mit dem Überschieber (7) werden in die Übemahmestellung zurückgeschwenkt.

12. Verfahren nach Anspruch 11,
**dadurch gekennzeichnet, dass** als Überbrückung zwischen den Schritten (a) und (b) das vierte Wegeventil (55) in demjenigen Schaltzustand gehalten wird, in welchem die Zubringerdüsen (53) mit Druckluft versorgt und die Glasgegenstände (2) in die Winkel (10) hineinbewegt werden.

## Claims

1. Device (1) for the purpose of transferring at least one hollow glass object (2) from a dead plate (3) of a glassware forming machine along a curved path (4) on to a conveyor belt (5),
having a transfer mechanism (7) which comprises a base part (8) and for each glass object (2) to be transferred comprises at least one pushing finger (9; 92) which extends in a transverse manner from the base part (8),
wherein each pushing finger (9; 92) defines with the base part (8) a comer (10) for the purpose of receiving the glass object (2),
wherein the transfer mechanism (7) comprises for each comer (10) at least one nozzle (11),
wherein each nozzle (11) can blow out compressed air in such a manner that negative pressure which draws the glass object (2) into the comer (10) is produced between the transfer mechanism (7) and the glass object (2),
wherein each nozzle (11) can be charged with compressed air by way of a supply duct (12) which is provided in the transfer mechanism (7),
wherein the transfer mechanism (7) is attached to free ends of two mutually parallel piston rods (13, 14), which are arranged in a horizontal plane, of pneumatic piston-cylinder units (15, 16) and the transfer mechanism (7) can be advanced to an outer end position and can be retracted to an inner starting position,
wherein the supply duct (12) is connected to a longitudinal duct (20) in a first one (13) of the piston rods (13, 14),
and wherein the piston-cylinder units (15, 16) can be pivoted in a reciprocating manner about a vertical axis (18) between a take-up position on the dead plate (3) and a transfer position on the conveyor belt (5),
**characterised in that** the longitudinal duct (20) passes through the entire first piston rod (13) and an associated first piston (21) of a first one (15) of the piston-cylinder units (15, 16) and issues into a first advance chamber (22) of an associated first cylinder (23),
that the first advance chamber (22) can be selectively connected by way of a first directional control valve (29) to a first compressed air source (31) of relatively low pressure, and that a second advance chamber (34) in a second cylinder (33) of a second one (16) of the piston-cylinder units (15, 16) can be selectively connected by way of a second directional control valve (40) to a second compressed air source (42) of relatively high pressure or can be connected to the atmosphere.

2. Device according to claim 1, **characterised in that** a first retraction chamber (43) in the first cylinder (23) and a second retraction chamber (35) in the second cylinder (33) can be selectively connected by way of a third directional control valve (46) to the second compressed air source (42) or to the atmosphere.

3. Device (1) for the purpose of transferring at least one hollow glass object (2) from a dead plate (3) of a glassware forming machine along a curved path (4) on to a conveyor belt (5), having a transfer mechanism (7) which comprises a base part (8) and for each glass object (2) to be transferred comprises at least one pushing finger (9; 92) which extends in a transverse manner from the base part (8),
wherein each pushing finger (9; 92) defines with the base part (8) a comer (10) for the purpose of receiving the glass object (2),
wherein the transfer mechanism (7) comprises for each comer (10) at least one nozzle (11),
wherein each nozzle (11) can blow out compressed air in such a manner that negative pressure which draws the glass object (2) into the comer (10) is produced between the transfer mechanism (7) and the glass object (2),
wherein each nozzle (11) can be charged with compressed air by way of a supply duct (12) which is provided in the transfer mechanism (7),
wherein the transfer mechanism (7) is attached to free ends of two mutually parallel piston rods (13, 14), which are arranged in a horizontal plane, of double-action, pneumatic piston-cylinder units (15, 16) and the transfer mechanism (7) can be advanced to an outer end position and retracted to an inner starting position by virtue of the piston-cylinder units (15, 16),
and wherein the piston-cylinder units (15, 16) can be pivoted in a reciprocating manner about a vertical axis (18) between a take-up position on the dead plate (3) and a transfer position on the conveyor belt (5),
**characterised in that** the supply duct (12) is connected to an inner chamber (82) of a gas-tight telescopic pipe (68),
that one end of the telescopic pipe (68) is attached in a sealed manner to the transfer mechanism (7) and the other end of the telescopic pipe (68) is attached in a sealed manner to a support structure (17) for the piston-cylinder units (15, 16),
and that an inlet in the telescopic pipe (68) can be selectively connected by way of a first directional control valve (29) to a first compressed air source (31) of relatively low pressure.

4. Device according to claim 3, **characterised in that** an advance chamber (22, 34) of each cylinder (23, 33) of the piston-cylinder units (15, 16) can be selectively connected by way of a fifth directional control valve (78) to the first compressed air source (31) or to the atmosphere.

5. Device according to claim 3 or 4, **characterised in that** a retraction chamber (35, 43) of each cylinder (23, 33) of the piston-cylinder units (15, 16) can be selectively connected by way of a third directional control valve (46) to a second compressed air source (42) of relatively high pressure or to the atmosphere.

6. Device according to any one of the claims 3 to 5, **characterised in that** an external pipe (69) of the telescopic pipe (68) is attached to the base part (8) of the transfer mechanism (7) and, sealed (85) at its free end, is guided on an internal pipe (81) of the telescopic pipe (68),
and that one end of the internal pipe (81) is attached to the support structure (17).

7. Device according to claim 6, **characterised in that** the free end of the external pipe (69) is provided with an external thread (71),
that a nut (73) which can be adjusted and fixed (72) along the external pipe (69) is in engagement with the external thread (71),
and that an end face (74) of the nut (73) facing the transfer mechanism (7) together
with an opposite-lying stop surface (75) of the support structure (17) defines the outer end position of the transfer mechanism (7).

8. Device according to any one of the claims 1 to 6, **characterised in that** at least one feeder nozzle (53) which is directed to the associated glass object (2) is arranged fixed to the machine adjacent to the at least one glass object (2) which has been set down on the dead plate (3),
that each feeder nozzle (53) can be selectively connected by way of a fourth directional control valve (55) to the first compressed air source (31),
and that the at least one glass container (2) can be moved, by virtue of compressed air jets issuing out of the at least one feeder nozzle (53), to a region in which the at least one nozzle (11) of the transfer mechanism (7) is effective.

9. Device according to claim 8, **characterised in that** each feeder nozzle (53) is originally directed in a tangential manner on to a side of the glass object (2) facing the associated pushing finger (9; 92).

10. Device according to any one of the claims 1 to 9, **characterised in that** an adjustable restrictor valve (57) is disposed in an output line (28; 39; 47; 54; 79) of each directional control valve (29; 40; 46; 55; 78).

11. Method of operating a device (1) according to any one of the claims 2 and 4 to 10, comprising the following steps:
(a) The transfer mechanism (7) is advanced to its outer end position by actuating the second (40) or the fifth directional control valve (78), whereas the retraction chambers (35, 43) are connected to the atmosphere by way of the third directional control valve (46),
(b) at least approximately at the same time on the one hand the pivot movement of the two piston-cylinder units (15, 16) and thus the transfer mechanism (7) with the glass objects (2), which are located in the comers (10), in the direction of the conveyor belt (5) is initiated, and on the other hand compressed air is supplied to the nozzles (11) by actuating the first directional control valve (29),
(c) shortly before the transfer mechanism (7) arrives at the transfer position, the first directional control valve (29) is switched over and therefore the supply of compressed air to the nozzles (11) is interrupted,
(d) shortly before arriving at the transfer position, the second (40) or the fifth directional control valve (78) is switched over for the purpose of ventilating the associated advance chambers (22, 34),
(e) at least approximately at the time of arriving at the transfer position, the third directional control valve (46) is switched over for the purpose of chargeing the retraction chambers (35, 43) with compressed air, whereby the transfer mechanism (7) is returned to its inner starting position in a rapid return motion, and
(f) the piston-cylinder units (15, 16) together with the transfer mechanism (7) are pivoted back to the take-up position.

12. Method according to claim 11, **characterised in that** as a bridge between steps (a) and (b) the fourth directional control valve (55) is held in the particular switching state, in which the feeder nozzles (53) are supplied with compressed air and the glass objects (2) are moved into the comers (10).

## Revendications

1. Dispositif (1) pour pousser au moins un objet en verre creux (2) d'une plaque de dépose (3) d'une machine à mouler le verre le long d'une piste (4) courbe vers une bande transporteuse (5),
avec un poussoir (7) qui possède une partie de base (8) et au moins une patte de poussée (9 ; 92) transversale à la partie de base (8) pour chaque objet en verre (2) à pousser ;
dans lequel chaque patte de poussée (9 ; 92) définit avec la partie de base (8) un angle (10) pour recevoir l'objet en verre (2) ;
dans lequel le poussoir (7) présente au. moins une buse (11) pour chaque angle (10) ;
dans lequel de l'air comprimé peut être injecté par chaque buse (11) de telle manière qu'il se crée entre le poussoir (7) et l'objet en verre (2) une dépression attirant l'objet en verre (2) dans l'angle (10) ;
dans lequel chaque buse (11) peut recevoir de l'air comprimé par un canal d'alimentation (12) prévu dans le poussoir (7) ;
dans lequel le poussoir (7) est fixé à des extrémités libres de deux tiges de piston (13, 14) de vérins pneumatiques (15, 16) parallèles et disposées dans un plan horizontal et le poussoir (7) peut être avancé dans une position de fin de course extérieure et ramené dans une position de départ intérieure,
dans lequel le canal d'alimentation (12) communique avec un canal longitudinal (20) dans une première (13) des tiges de piston (13,14),
et dans lequel les vérins pneumatiques (15, 16) peuvent basculer en va-et-vient autour d'un axe vertical (18) entre une position de prise en charge sur la plaque de dépose (3) et une position de dépose sur la bande de transport (5),
**caractérisé en ce que** le canal longitudinal (20) traverse toute la première tige de piston (13) et un premier piston (21) correspondant d'un premier (15) vérin pneumatique (15, 16) et débouche dans un premier espace d'avancement (22) d'un premier cylindre (23) correspondant,
**en ce que** le premier espace d'avancement (22) peut être mis en communication sélectivement par une première vanne de distribution (29) avec une première source d'air comprimée (31) à pression relativement basse,
et **en ce qu'**un deuxième espace d'avancement (34) dans un deuxième cylindre (33) d'un deuxième (16) des vérins (15, 16) peut être mis en communication sélectivement par une deuxième vanne de distribution (40) avec une deuxième source d'air comprimé (42) à pression relativement élevée ou avec l'atmosphère.

2. Dispositif selon la revendication 1, **caractérisé en ce qu'**un premier espace de retrait (43) dans le premier cylindre (23) et un deuxième espace de retrait (35) dans le deuxième cylindre (33) peuvent être mis en communication sélectivement par une troisième vanne de distribution (46) avec la deuxième source d'air comprimé (42) ou avec l'atmosphère.

3. Dispositif (1) pour pousser au moins un objet en verre creux (2) d'une plaque de dépose (3) d'une machine à mouler le verre le long d'une piste (4) courbe vers une bande transporteuse (5),
avec un poussoir (7) qui possède une partie de base (8) et au moins une patte de poussée (9 ; 92) transversale à la partie de base (8) pour chaque objet en verre (2) à pousser ;
dans lequel chaque patte de poussée (9 ; 92) définit avec la partie de base (8) un angle (10) pour recevoir l'objet en verre (2) ;
dans lequel le poussoir (7) présente au moins une buse (11) pour chaque angle (10) ;
dans lequel de l'air comprimé peut être injecté par chaque buse (11) de telle manière qu'il se crée entre le poussoir (7) et l'objet en verre (2) une dépression attirant l'objet en verre (2) dans l'angle (10) ;
dans lequel chaque buse (11) peut recevoir de l'air comprimé par un canal d'alimentation (12) prévu dans le poussoir (7) ;
dans lequel le poussoir (7) est fixé à des extrémités libres de deux tiges de piston (13, 14) de vérins pneumatiques à double action (15, 16) parallèles et disposées dans un plan horizontal et le poussoir (7) peut être avancé dans une position de fin de course extérieure et ramené dans une position de départ intérieure,
et dans lequel les vérins (15, 16) peuvent basculer en va-et-vient autour d'un axe vertical (18) entre une position de prise en charge sur la plaque de dépose (3) et une position de dépose sur la bande de transport (5),
**caractérisé en ce que** le canal d'alimentation (12) communique avec un espace intérieur (82) d'un tube télescopique (68) étanche au gaz,
**en ce qu'**une extrémité du tube télescopique (68) est fixée de manière étanche au poussoir (7) et l'autre extrémité du tube télescopique (68) à une structure portante (17) pour les vérins (15, 16),
et **en ce que** l'entrée du tube télescopique (68) peut être mise sélectivement en communication par une première vanne de distribution (29) avec une première source d'air comprimé (31) à pression relativement basse.

4. Dispositif selon la revendication 3, **caractérisé en ce qu'**un espace d'avancement (22, 34) de chaque cylindre (23, 33) des vérins (15, 16) peut être mis en communication sélectivement par une cinquième vanne de distribution (78) avec la première source d'air comprimé (31) ou avec l'atmosphère.

5. Dispositif selon la revendication 3 ou 4, **caractérisé en ce qu'**un espace de retrait (35, 43) de chaque cylindre (23, 33) des vérins (15, 16) peut être mis en communication sélectivement par une troisième vanne de distribution (46) avec une deuxième source d'air comprimé (42) à pression relativement élevée ou avec l'atmosphère.

6. Dispositif selon l'une ou l'ensemble des revendications 3 à 5, **caractérisé en ce qu'**un tube extérieur (69) du tube télescopique (68) est fixé sur la partie de base (8) du poussoir (7) et guidé de façon étanche (85) à son extrémité libre sur un tube intérieur (81) du tube télescopique (68),
et **en ce qu'**une extrémité du tube intérieur (81) est fixée à la structure portante (17).

7. Dispositif selon la revendication 6, **caractérisé en ce que** l'extrémité libre du tube extérieur (69) est pourvue d'un filetage extérieur (71),
**en ce qu'**un écrou (73) pouvant être ajusté et fixé (72) le long du tube extérieur (69) est en prise avec le filetage extérieur (71)
et **en ce qu'**une face (74) de l'écrou (73) tournée vers le poussoir (7) définit avec une surface de butée (75) opposée de la structure portante (17) la position de fin de course extérieure du poussoir (7).

8. Dispositif selon l'une ou l'ensemble des revendications 1 à 6, **caractérisé en ce qu'**il est prévu près de l'objet en verre (2) au nombre d'un au moins déposé sur la plaque de dépose (3) au moins une buse d'amenée (53) orientée vers l'objet en verre (2) correspondant et solidaire de la machine,
**en ce que** chaque buse d'amenée (53) peut être mise en communication sélectivement par une quatrième vanne de distribution (55) avec la première source d'air comprimé (31),
et **en ce que** le récipient en verre (2) au nombre d'un au moins peut être déplacé par des jets d'air comprimé sortant de la buse d'amenée (53) au nombre d'une au moins dans une zone d'action de la buse (11) au nombre d'une au moins du poussoir (7).

9. Dispositif selon la revendication 8, **caractérisé en ce que** chaque buse d'amenée (53) est initialement orientée de façon tangente vers un côté de l'objet en verre (2) orienté vers la patte de poussée (9 ; 92) correspondante.

10. Dispositif selon l'une ou l'ensemble des revendications 1 à 9, **caractérisé en ce qu'**une soupape d'étranglement (57) réglable est prévue dans une conduite de sortie (28 ; 39 ; 47 ; 54 ; 79) de chaque vanne de distribution (29 ; 40 ; 46 ; 55 ; 78).

11. Procédé pour le pilotage d'un dispositif (1) selon l'une ou l'ensemble des revendications 2 et 4 à 10, comprenant les étapes suivantes :
(a) le poussoir (7) est avancé dans sa position de fin de course extérieure par l'actionnement de la deuxième vanne de distribution (40) ou de la cinquième (78), tandis que les espaces de retrait (35, 43) sont mis en communication avec l'atmosphère par la troisième vanne de distribution (46) ;
(b) de manière approximativement simultanée, les deux vérins (15, 16) et le poussoir (7) avec les objets en verre (2) installés dans les angles (10) sont amenés à pivoter vers la bande transporteuse (5), d'une part, et d'autre part, de l'air comprimé est amené aux buses (11) par l'actionnement de la première vanne de distribution (29) ;
(c) peu avant que le poussoir (7) parvienne dans la position de dépose, la première vanne de distribution (29) est commutée et l'arrivée d'air aux buses (11) est interrompue ;
(d) avant l'arrivée dans la position de dépose, la deuxième vanne de distribution (40) ou la cinquième (78) est commutée pour purger les espaces d'avancement (22, 34) correspondants ;
(e) au moins approximativement au moment où la position de dépose est atteinte, la troisième vanne de distribution (46) est commutée afin d'amener l'air comprimé dans les espaces de retrait (35, 43), ce qui ramène le poussoir (7) de façon accélérée dans sa position de départ intérieure ; et
(f) les vérins (15, 16) sont ramenés dans la position de prise en charge en pivotant avec le poussoir (7).

12. Procédé selon la revendication 11, **caractérisé en ce qu'**en transition entre les étapes (a) et (b), la quatrième vanne de distribution (55) est maintenue dans l'état de commutation dans lequel les buses d'amenée (53) reçoivent de l'air comprimé et les objets en verre (2) sont amenés dans les angles (10).
